Europäisches Patentamt

(19) European Patent Office

Office européen des brevets

(11) Veröffentlichungsnummer: **0 222 350**
**B1**

(12) # EUROPÄISCHE PATENTSCHRIFT

(45) Veröffentlichungstag der Patentschrifft:
07.02.90

(51) Int. Cl. 5: **F 16 F 13/00**, F 16 F 9/46

(21) Anmeldenummer: 86115505.9

(22) Anmeldetag: 08.11.86

(54) **Luftfederelement.**

(30) Priorität: 13.11.85 DE 3540300

(43) Veröffentlichungstag der Anmeldung:
20.05.87 Patentblatt 87/21

(45) Bekanntmachung des Hinweises auf die Patenterteilung:
07.02.90 Patentblatt 90/06

(84) Bennante Vertragsstaaten:
DE ES FR GB IT SE

(56) Entgegenhaltungen:

PATENT ABSTRACTS OF JAPAN, Band 4, Nr. 161 (M-40) 643 , 11. November 1980, Seite 164 M 40; & JP-A-55 112 440 (TOKYO SHIBAURA DENKI K.K.) 30-08-1980

PATENT ABSTRACTS OF JAPAN, Band 9, Nr. 117 (M-381) 1840 , 22. Mai 1985; & JP-A-60 4640 (TOYODA GOSEI K.K.) 11-01-1985

(73) Patentinhaber: **METZELER Gesellschaft mit beschränkter Haftung**
**Gneisenaustrasse 15**
**D-8000 München 50 (DE)**

(72) Erfinder: **Härtel, Volker, Dr.**
**Fichtenstrasse 50**
**D-8034 Germering (DE)**

(74) Vertreter: **Michelis, Theodor, Dipl.-Ing.**
**Gneisenaustrasse 15**
**D-8000 München 50 (DE)**

### Beschreibung

Die Erfindung betrifft ein Luftfederelement mit einem faltenbalgähnlichen Federkörper, der im Innern mit Druckluft beaufschlagt ist.

Derartige Luftfederelemente, die üblicherweise an eine Druckluftquelle zur Einstellung und Konstanthaltung des Luftdrucks in dem elastischen, balgartig ausgebildeten Federkörper angeschlossen sind, haben eine von der Einfederung unabhängige Federrate und eine immer gleiche Rückstellkraft und damit gleiche Steifigkeit. Der Nachteil dieser Luftfederelemente besteht aber darin, daß sie beim Einfedern praktisch keine Dämpfung aufweisen, d.h., daß eingeleitete schwingungsähnliche Belastungen nicht gedämpft werden. Um dies zu erreichen, müssen üblicherweise gesonderte Dämpfer parallel geschaltet werden.

Der vorliegenden Erfindung liegt demgegenüber die Aufgabe zugrunde, ein Luftfederelement zu schaffen, dessen Steifigkeit in herkömmlicher Weise durch den Luftdruck eingestellt werden kann, bei dem aber zusätzlich eine Dämpfung vorgesehen ist, die ebenfalls variabel einstellbar ist, und zwar weitgehend unabhängig von der Steifigkeit und über einen großen Frequenzbereich.

Zur Lösung dieser Aufgabe ist erfindungsgemäß vorgesehen, daß der Federkörper innerhalb einer, von einer gummielastischen Umfangswand und zwei starren Stirnwänden abgeschlossenen Kammer angeordnet ist, und daß die durch den Federkörper abgeteilte Außenkammer zwischen Federkörper und Umfangswand mit einer, durch ein elektrisches Feld ansteuerbaren elektroviskosen Flüssigkeit gefüllt ist.

Zweckmäßigerweise besteht dabei der faltenbalgähnliche Federkörper aus einem Stapel von mindestens drei ringscheibenförmigen Metallplatten, die alternierend am Innen- oder Außenumfang durch ringförmige Gummielemente als Gelenke verbunden und alternierend an eine Spannungsquelle bzw. an Erdpotential angeschlossen sind.

Beim Einfedern dieses Federkörpers verringert sich der Abstand zwischen den Metallplatten, so daß die in den Zwischenräumen zwischen jeweils zwei am Außenumfang offenen Platten befindliche Flüssigkeit nach außen gedrängt wird. Schon hierdurch ist ein gewisser Dämpfungseffekt zu erreichen. Durch Anlegen einer Spannung an diese als Elektroden wirkenden Metallplatten kann zusätzlich die Viskosität der elektroviskosen Flüssigkeit geändert werden, wodurch sich auch der Strömungswiderstand und damit die Dämpfung des Federelementes ändern.

Weitere zweckmäßige Ausgestaltungen der Erfindung sind in den Unteransprüchen genannt.

Anhand einer schematischen Zeichnung sind Aufbau und Wirkungsweise eines Ausführungsbeispiels nach der Erfindung näher erläutert.

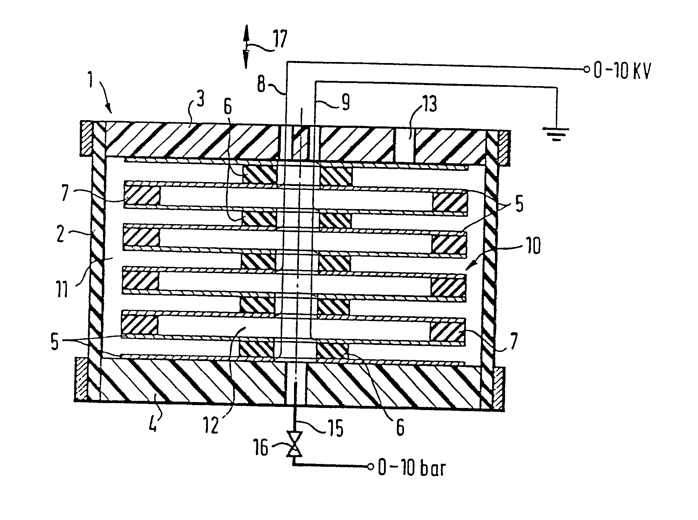

Dabei zeigt die einzige Figur einen Längsschnitt durch ein derartiges Federelement im unbelasteten Zustand.

Wie aus der Zeichnung zu ersehen ist, weist das Federelement 1 eine äußeres Gehäuse auf, das aus einer zylindrischen Gummiwandung 2 und den beiden massiven Stirnwänden 3 und 4 besteht, die zweckmäßigerweise aus einem Kunststoff gefertigt sind. Koaxial zur zylindrischen Gummiwandung 2 ist nunmehr im Inneren nach dem dargestellten Ausführungsbeispiel ein Stapel von zehn ringscheibenförmiger Metallplatten 5 angeordnet, die einen geringeren Durchmesser als der Innendurchmesser der gummielastischen Umfangswandung 2 aufweisen. Hierbei ist jedoch entsprechend den Anforderungen auch eine andere Anzahl von Metallplatten möglich, wobei jedoch mindestens drei Platten vorzusehen sind. Diese Metallplatten 5 sind alternierend im Bereich des Innenumfangs durch ringförmige Gummielemente 6 und im Bereich des Außenumfangs durch ringförmige Gummielemente 7 größeren Durchmessers miteinander verbunden, wobei diese Gummielemente 6 und 7 zweckmäßigerweise an die Metallplatten 5 anvulkanisiert sind. Damit lassen sich die Metallplatten 5 wie ein Faltenbalg auseinanderziehen bzw. komprimieren, wobei die abwechselnd innen und außen anvulkanisierten Gummielemente die Funktion der Gelenke übernehmen.

Die Dicke der ringscheibenförmigen Metallplatten 5 beträgt zweckmäßigerweise 0,1 bis 1,0 mm, während ihr Abstand voneinander im unbelasteten Zustand etwa 1 bis 5 mm beträgt. Die entsprechend dicken Gummielemente 2 sind zweckmäßigerweise aus einem elektrisch isolierenden Elastomerwerkstoff gefertigt.

Die Metallplatten 5 sind nunmehr alternierend über eine durch die obere Stirnwand 3 hindurchgeführte Zuleitung 8 an eine nicht näher dargestellte Spannungsquelle von 0 bis 10 KV bzw. über eine Zuleitung 9 an Erdpotential gelegt. Die Kontaktierung erfolgt dabei über die luftgefüllte Innenkammer 12, da dort eine gute Zugänglichkeit herrscht. Die Zuleitungen 8 und 9 können aus elektrisch leitfähigem Kautschuk bestehen und direkt an die Metallplatten 5 anvulkanisiert sein, da die benötigten Ströme selbst bei Spannungen von 10 KV so gering sind, daß die Leitfähigkeit von rußgefüllten Kautschukmischungen für die notwendige Stromzuführung völlig ausreicht.

Durch den von den Metallplatten 5 und den ringförmigen Gummielementen 6 und 7 gebildeten Federkörper 10 werden innerhalb der gummielastischen Umfangswandung 2 zwei konzentrisch zueinander liegende Kammern 11 und 12 abgeteilt. Die innerhalb des Federkörpers 10 liegende Kammer 11 ist über die untere Stirnwand 4 durch ein Ventil 16 an eine regelbare Preßluftzuleitung 15 angeschlossen, wodurch die Innenkammer 12 mit einem regelbaren Druck von 0 bis 10 bar beaufschlagt werden kann.

Die äußere Kammer 11 zwischen dem Federkörper 10 und der Umfangswandung 2 ist jetzt mit einer elektroviskosen Flüssigkeit gefüllt, die beispielsweise über die verschließbare Öffnung 13 in der oberen Stirnwandung 3 eingefüllt werden kann. Die elektroviskose Flüssigkeit kann beispielsweise aus einer Mischung von etwa 40 bis 60 Gew.-% Kieselsäure als Feststoff, 30 bis 50 Gew.-% einer geeigneten organischen Phase mit niedriger Elektrizitätskonstante, 5 bis 10 Gew.-% Wasser, sowie etwa 5 Gew.-% eines Dispergiermittels bestehen und eine Grundviskosität von 100 bis 3.000 mPa x s aufweisen.

Die Funktionsweise eines derartigen Luftfederelementes ist nunmehr die folgende:

Bei einer Krafteinwirkung von oben entsprechend dem Pfeil 17 wird der Stapel Metallplatten 5 zusammengedrückt und damit die Luft im Federkörper 10 komprimiert. Diese erzeugt eine Rückstellkraft, die weitgehend die Steifigkeit des Luftfederelementes bestimmt. Ein geringer Beitrag an der Steifigkeit wird noch durch die elastische Verformung der Metallplatten 5 sowie die als Gelenke wirkenden Gummielemente 6 und 7 bewirkt. Gleichzeitig mit dem Zusammendrücken der Metallplatten 5 verringert sich der Abstand zwischen diesen und die in den Zwischenräumen befindliche elektroviskose Flüssigkeit wird nach außen gedrängt und wölbt die Umfangswandung 2 nach außen aus. Beim Entspannen wird die Flüssigkeit durch den äußeren Luftdruck und bei einer entsprechend volumensteifen Ausführung der Umfangswand 2 auch durch deren Rückstellkräfte in die Zwischenräume zwischen den Metallplatten 5 zurückgedrückt.

Wenn nun an die Metallplatten 5 alternierend Hochspannung bzw. Erdpotential angelegt wird, so daß diese Metallplatten als Elektroden wirken, nimmt dadurch die Viskosität der Flüssigkeit, die sich zwischen den Metallplatten 5 befindet, stark zu und beim Zusammendrücken entsteht ein deutlich höherer, im wesentlichen geschwindigkeitsproportionaler Verformungswiderstand, der sich in einer Erhöhung der Dämpfungskonstante des Federelementes 1 auswirkt.

Bei einem erfindungsgemäß ausgestalteten Luftfederelement ergab sich bei einem Luftdruck von 3 bar innerhalb des Federkörpers 10 eine Federsteifigkeit von 250 N/mm und ein mechanischer Verlustwinkel von 5 Grad. Diese Grunddämpfung wird durch die Viskosität der verwendeten Flüssigkeit sowie die als Gelenke zwischen den Metallplatten 5 verwendeten Gummielemente 6 und 7 bewirkt. Durch eine Spannungserhöhung von 0 auf 4 KV ergab sich im Bereich von 0 bis 100 Hz ein Anstieg des mechanischen Verlustwinkels auf 20 Grad und damit eine ganz wesentliche Erhöhung der Dämpfung, ohne daß sich die Federsteifigkeit nennenswert veränderte. Durch entsprechende geometrische Abstimmung der einzelnen Bauteile des Luftfederelementes sowie einer Optimierung der Flüssigkeits-Grundviskosität lassen sich diese Werte noch deutlich erhöhen.

Mit der beschriebenen Ausbildung des Luftfederelementes und der Verwendung einer elektroviskosen Flüssigkeit kann somit auf einfache Weise die Grundsteifigkeit über den Luftdruck eingestellt und zusätzlich eine Dämpfung erreicht und mit der entsprechenden Steuerspannung in weiten Grenzen gesteuert werden. Die Viskosität der verwendeten Flüssigkeit läßt sich dabei je nach Zusammensetzung, Grundviskosität und mechanischem Aufbau des Luftfederelementes durch Anlegen des elektrischen Feldes um den Faktor 3 bis 1000 verändern, wobei die gesamte Leistungsaufnahme des Elementes im allgemeinen weniger als 2 Watt beträgt.

## Patentansprüche

1. Luftfederelement mit einem faltenbalgähnlichen Federkörper, der im Innern mit Druckluft beaufschlagt ist, dadurch gekennzeichnet, daß der Federkörper (10) innerhalb einer von einer gummielastischen Umfangswand (2) und zwei starren Stirnwänden (3, 4) abgeschlossenen Kammer angeordnet ist und daß die durch den Federkörper (10) abgeteilte Außenkammer (11) zwischen Federkörper (10) und Umfangswand (2) mit einer durch ein elektrisches Feld ansteuerbaren elektroviskosen Flüssigkeit gefüllt ist.

2. Luftfederelement nach Anspruch 1, dadurch gekennzeichnet, daß der faltenbalgähnliche Federkörper (10) aus einem Stapel von mindestens drei ringscheibenförmigen Metallplatten (5) besteht, die alternierend am Innen- oder Außenumfang durch ringförmige Gummielemente (6, 7) verbunden und alternierend an eine Spannungsquelle bzw. Erdpotential angeschlossen sind.

3. Luftfederelement nach Anspruch 2, dadurch gekennzeichnet, daß der Abstand der Metallplatten (5) im unbelasteten Zustand 1 bis 5 mm beträgt.

4. Luftfederelement nach Anspruch 2, dadurch gekennzeichnet, daß die ringförmigen Gummielemente (6, 7) als Gelenke und Isolatoren für die Metallplatten (5) aus einem elektrisch isolierenden Elastomerwerkstoff bestehen.

5. Luftfederelement nach Anspruch 1, dadurch gekennzeichnet, daß die elektrischen Anschlüsse (8, 9) für die Metallplatten (5) innerhalb der luftgefüllten Innenkammer (12) verlaufen.

6. Luftfederelement nach Anspruch 5, dadurch gekennzeichnet, daß die Anschlüsse (8, 9) aus elektrisch leitfähigem Kautschuk bestehen.

7. Luftfederelement nach Anspruch 1 oder 2, dadurch gekennzeichnet, daß eine der Stirnplatten (4) ein mit der Innenkammer (12) des Federkörpers (10) in Verbindung stehendes Druckluftventil (16) aufweist.

## Claims

1. A pneumatic spring element having a bellowslike spring body to the interior of which is admitted compressed air, characterised in that the spring body (10) is disposed within a chamber closed by a rubber-elastic circumferential wall (2) and two rigid end walls (3, 4), and that the outer chamber (11) partitioned off by the spring body (10) is filled with an electroviscous fluid, controllable by an electric field, between the spring body (10) and the circumferential wall (2).

2. A pneumatic spring element as claimed in claim 1, characterised in that the bellows-like spring body (10) comprises a stack of at least three annular disc-shaped metal plates (5) which are alternately connected at the inner periphery or outer periphery by annular rubber elements (6, 7) and alternately connected to a source of voltage and earth potential respectively.

3. A pneumatic spring element as claimed in claim 2, characterised in that the distance between the metal plates (5) in the unstressed state is 1 to 5 mm.

4. A pneumatic spring element as claimed in claim 2, characterised in that the annular rubber elements (6, 7) as joints and insulators for the metal plates (5) are made from an electrically insulating elastomer material.

5. A pneumatic spring element as claimed in claim 1, characterised in that the electrical connections (8, 9) for the metal plates (5) extend within the air-filled inner chamber (12).

6. A pneumatic spring element as claimed in claim 5, characterised in that the connections (8, 9) are made from electrically conductive caoutchouc.

7. A pneumatic spring element as claimed in claim 1 or 2, characterised in that one of the end plates (4) has a compressed-air valve (16) connected to the inner chamber (12) of the spring body (10).

**Revendications**

1. Coussin pneumatique comprenant un corps élastique analogue à un soufflet dont l'intérieur est alimenté en air comprimé, caractérisé en ce que le corps élastique (10) est disposé à l'intérieur d'une chambre définie par une paroi périphérique (2) ayant l'élasticité du caoutchouc et par deux parois frontales (3, 4) rigides et en ce que la chambre extérieure (11) délimitée par le corps élastique (10) entre le corps élastique (10) et la paroi périphérique (2) est emplie d'un liquide électro-visqueux, dont la viscosité peut être réglée par un champ électrique.

2. Coussin pneumatique suivant la revendication 1, caractérisé en ce que le corps élastique (10) analogue à un soufflet est constitué d'une pile d'au moins trois plaques métalliques (5) en forme de disques annulaires, qui sont reliées alternativement sur le pourtour extérieur ou sur le pourtour intérieur par des éléments annulaires en caoutchouc (6, 7) et qui sont reliées alternativement à une source de tension ou au potentiel terre.

3. Coussin pneumatique selon la revendication 2, caractérisé en ce que la distance entre les plaques métalliques (5) à l'état non chargé est comprise entre 1 et 5 mm.

4. Coussin pneumatique selon la revendication 2, caractérisé en ce que les éléments annulaires en caoutchouc (6, 7), servant d'articulations et d'isolateurs aux plaques métalliques (5), sont en un matériau élastomère électriquement isolant.

5. Coussin pneumatique selon la revendication 1, caractérisé en ce que les bornes électriques (8, 9) des plaques métalliques (5) s'étendent dans la chambre intérieure (12) emplie d'air.

6. Coussin pneumatique selon la revendication 5, caractérisé en ce que les bornes (8, 9) sont en caoutchouc conducteur de l'électricité.

7. Coussin pneumatique selon la revendication 1 ou 2, caractérisé en ce que l'une des plaques frontales (4) comporte une soupape d'air comprimé (16) communiquant avec la chambre intérieure (12) du corps élastique (10).